# EUROPÄISCHE PATENTSCHRIFT

(11) **EP 0 921 338 B1**
(45) Veröffentlichungstag und Bekanntmachung des Hinweises auf die Patenterteilung: **12.09.2001**
(21) Anmeldenummer: 98122925.5
(22) Anmeldetag: 03.12.1998
(51) Int. Cl.: F16K 37/00

(54) **Signalgeber für einen Stellantrieb**
Signalling device for an actuator
Dispositif de signalisation pour un actionneur

(30) Priorität: 06.12.1997 DE 19754271
(43) Veröffentlichungstag der Anmeldung: 09.06.1999
(73) Patentinhaber: Armatic Gesellschaft für automatische Armaturen mbH, 97236 Randersacker (DE)
(72) Erfinder:
(74) Vertreter: Bauer, Dirk, Dipl.-Ing. Dipl.-Kfm.

(56) Entgegenhaltungen:
- EP-A- 0 797 035
- US-A- 5 223 822
- US-A- 5 305 781
- Prospekt Z1-C-02-237

## Beschreibung

Die Erfindung betrifft einen Signalgeber für einen Stellantrieb gemäß den Oberbegriffen der Ansprüche 1 und 7.

Derartige Signalgeber sind allgemein bekannt (siehe z.B. die US-A-5 305 781) und werden zur Rückmeldung, beispielsweise der Endlagen von Armaturen, die mittels eines Stellantriebs betätigt werden, verwendet. Der Stellantrieb besitzt auf seiner Unterseite eine Antriebswelle für die Armatur, die über dessen Oberseite hinaus verlängerbar ist, um somit absolut synchron einen Signalgeber - auch Positions-Rückmelder genannt - betätigen zu können. Die Maße der vorstehenden Betätigungswelle sind ebenso genormt wie Befestigungsbohrungen, die sich auf der Oberseite des Stellantriebs befinden und zur Fixierung von Füßen des Signalgebers dienen.

Um den Signalgeber vor Ort unter Berücksichtigung der tatsächlichen Armaturenstellung einstellen zu können, ist es erforderlich, eine Positionierbarkeit der Schaltnocken bzw. Schaltelemente in einer Vielzahl von Winkelstellungen in bezug auf die Schaltwelle vorzusehen. Beispielsweise ist es bekannt, eine formschlüssige Befestigung der Schaltnocken bzw. Schaltelemente durch eine Verzahnung der vorgenannten Bauteile herbeizuführen. Um dennoch eine Verstellmöglichkeit zu schaffen, ist es erforderlich, die mit einer Innenverzahnung versehenen Schaltnocken bzw. Schaltelemente durch eine axiale Verschiebung aus dem außenverzahnten Bereich der Schaltwelle zu verschieben, um im verzahnungsfreien Bereich derselben die gewünschte Verdrehung durchführen zu können. Sodann müssen die Schaltnocken wieder auf die Außenverzahnung aufgeschoben werden, um eine formschlüssige Verbindung herzustellen. Es ist offensichtlich, daß eine solche Verstellung aufwendig und unpraktisch ist, insbesondere wenn axial übereinander mehrere Schaltnocken bzw. Schaltelemente angeordnet sind und ungünstigerweise nur der untere Schaltnocken bzw. das untere Schaltelement verstellt werden muß. Es kann dabei leicht vorkommen, daß der zuvor korrekt positionierte obere Schaltnocken bzw. das obere Schaltelement nach dem Abnehmen und wiederholten Aufschieben in eine falsche Position gerät und erneut eingestellt werden muß.

Aus dem Prospekt Nr. Z1-C-02-237 der Firma bar GmbH ist es bekannt, die Schaltnocken zwecks Verstellbarkeit mit einem Planetengetriebe zu versehen. Mittels eines Werkzeugs, beispielsweise eines Schraubendrehers, lassen sich Einstellschrauben herunterdrücken und anschließend verdrehen, wodurch eine Verstellung des Planetengetriebes und damit auch des Schaltnockens ermöglicht wird. Bei diesem bekannten Signalgeber ist zwar die Einstellung der Schaltnocken vergleichsweise einfach, doch sind die mit einem Planetengetriebe versehenen Schaltnocken in ihrem Aufbau kompliziert und daher in der Herstellung teuer.

Ferner ist ein weiteres Einstellprinzip der Schaltnocken bekannt, wonach diese mit einer Stirnverzahnung versehen sind, die jeweils mit einer Stirnverzahnung an einem Absatz der Schaltwelle zusammenwirkt. Mit Hilfe einer in axiale Richtung wirkenden Feder werden die beiden korrespondierenden Stirnverzahnungen aufeinandergedrückt, weshalb eine verdrehfeste Verbindung zwischen dem Schaltnocken und der Schaltwelle entsteht Entgegen der Federkraft kann der Schaltnocken zu Einstellungszwecken von der wellenfesten Verzahnung abgehoben werden und nach Überführung in die gewünschte Position wieder abgesetzt werden, woraufhin ohne Einwirkung einer äußeren Kraft wieder ein Formschluß besteht.

Das vorgenannte Einstellungsprinzip ist jedoch unpraktisch in seiner Handhabung, da bei beengten Platzverhältnissen die Schaltnocken manuell in axiale Richtung verschoben werden müssen, wobei sich insbesondere die in dem Signalgebergehäuse befindlichen diversen Einbauten als sehr hinderlich erweisen. Des weiteren ist die absolute Größe der Schaltnocken wie des Gehäuses insgesamt vergleichsweise gering, weshalb ein erhebliches "Fingerspitzengefühl" bei der Einstellung erforderlich ist.

Ein weiteres Problem bei bekannten Signalgebern besteht darin, daß das Montieren und Anschließen der mechanischen oder induktiven Schalter in dem Gehäuse aufgrund der beengten Platzverhältnisse und der geringen Größe der Bauteile recht kompliziert ist. Eine Vormontage der Schalter gleichzeitig mit der Herstellung der Signalgeber ist deshalb nicht möglich, weil je nach Anwendungsfall und den speziellen Wünschen der Nutzer unterschiedliche Schaltertypen aus einer großen Anzahl von Standardtypen ausgewählt werden müssen. Unter anderem aus dem vorgenannten Prospekt der Firma bar GmbH ist es bereits bekannt, die Schalter sowie weitere elektrische bzw. elektronische Komponenten auf einer Platine vorzumontieren. Dabei hat die Platine zwar immer die gleichen Abmessungen und zwei an Gewindebohrungen am Boden des Gehäuses angepaßte Aufnahmebohrungen für Befestigungsschrauben, doch ist der Aufbau der Platine den individuellen Wünschen des jeweiligen Nutzers anzupassen. Die insofern erleichterte Montage und Verdrahtung der Schalter wird folglich mit dem Nachteil erkauft, daß eine Vielzahl unterschiedlichster vorbereiteter Platinenelemente hergestellt und bereitgehalten werden muß, woraus hohe Kosten für die Produktion und Lagerhaltung resultieren.

Der Erfindung liegt die Aufgabe zugrunde, einen Signalgeber vorzuschlagen, bei dem der Montageaufwand bei der Einrichtung des Signalgebers beim Nutzer in Form einer korrekten Positionierung der Schaltnocken bzw. Schaltelemente sowie einem Einbau und der Verdrahtung der mechanischen und/oder induktiven Schalter innerhalb des Gehäuses deutlich vermindert wird.

Ausgehend von einem Signalgeber gemäß dem Oberbegriff des Anspruchs 1, wird diese Aufgabe erfindungsgemäß zum einen dadurch gelöst, daß die Innenverzahnung mit mindestens einem jeweils zugeordneten entsprechend außenverzahnten Abschnitt in im übrigen verzahnungsfreien Schaltwelle in Eingriff bringbar ist, wobei der Abschnitt elastisch in Richtung der Mittelachse der Schaltwelle verlagerbar ist.

Aufgrund der elastischen Verlagerbarkeit des außenverzahnten Abschnitts wird mit Hilfe der beiden ineinandergreifenden Verzahnungen eine nur bedingt formschlüssige Verbindung zwischen dem Schaltnocken bzw. Schaltelement und der Schaltwelle hergestellt, die bei Überschreiten eines bestimmten Grenzdrehmoments zwischen den vorgenannten Bauteilen aufhebbar ist. Die für die Betätigung eines mechanischen Schalters benötigten Kräfte erfordern dabei regelmäßig ein sehr geringes Drehmoment, das weit unterhalb des Grenzdrehmoments liegt. Zur Betätigung eines induktiven, das heißt, berührungslosen Schalters, ist das erforderliche Drehmoment nahezu gleich null. Bei der Betätigung beider vorgenannter Schalterarten liegt also eine formschlüssige und insofern hinreichend drehmomentfeste Verbindung zwischen dem Schaltnocken bzw. Schaltelement und der Schaltwelle vor.

Um die Winkelstellung eines Schaltnockens bzw. Schaltelements auf der Schaltwelle zu verändern, ist es bei dem erfindungsgemäßen Signalgeber lediglich erforderlich, auf den Schaltnocken bzw. das Schaltelement in die gewünschte Drehrichtung ein solches Drehmoment aufzubringen, das größer als das Grenzdrehmoment ist. In diesem Fall kommt es nämlich zu einer elastischen Verlagerung des außenverzahnten Abschnitts der Schaltwelle in Richtung deren Mittelachse, so daß unter kurzzeitiger Aufhebung des Formschlusses eine Relativbewegung des Schaltnockens bzw. Schaltelements zu der Schaltwelle möglich ist. Die Verlagerung des außenverzahnten Abschnitts wird dabei durch eine Neigung der Flanken der Verzahnung ermöglicht, die ein Aufgleiten jeweils gegenüberliegender Zähne der. Innenverzahnung und der Außenverzahnung aufeinander und damit ein "gerastertes Durchrutschen" erlaubt, sofern ein hinreichend großes Drehmoment auf den Schaltnocken bzw. das Schaltelement aufgebracht wird. Da die Schaltwelle mit Ausnahme des verlagerbaren Abschnitts keine weitere Außenverzahnung aufweist, ist im rückverlagerten Zustand des Abschnitts eine ungehinderte Relativverdrehung möglich.

Gemäß einer Ausgestaltung der Erfindung wird vorgeschlagen, daß die Schaltwelle als Hohlwelle ausgebildet und der außenverzahnte Abschnitt von einem federnden Teil der Wandung der Hohlwelle gebildet wird, der über einen Steg mit der übrigen Wandung verbunden ist.

Auf diese Weise läßt sich die elastische Verschiebung des außenverzahnten Abschnitts in Richtung auf die Mittelachse der Schaltwelle auf sehr einfache Weise realisieren. Aufgrund der Ausbildung als Hohlwelle ist für die Verlagerung des außenverzahnten Abschnitts nach innen hinreichend viel Platz vorhanden.

Hinsichtlich der Herstellungskosten ist es besonders vorteilhaft, daß der federnde Teil von einem U-förmigen Durchbruch in der Wandung begrenzt wird. Ein solcher Durchbruch kann bei der spritzgußtechnischen Herstellung der Schaltwelle einfach eingeformt werden.

Wenn die Schaltwelle mindestens eine halbovalförmige und in Richtung der Mittelachse verlaufende Nut aufweist, die sich von der dem Stellantrieb abgewandten Stirnseite bis zu der Innenverzahnung des Schaltnockens bzw. Schaltelements erstreckt, kann in diese Nut ein angepaßtes außenverzahntes Verstellwerkzeug eingeführt werden, das in einer axialen Endstellung mit seiner Außenverzahnung in die Innenverzahnung der Schaltnocke bzw. des Schaltelements eingreift. Auf diese Weise läßt sich mit Hilfe eines erforderlichenfalls weit nach außen reichenden Einstellwerkzeugs ein Drehmoment auf einen Schaltnocken bzw. ein Schaltelement ausüben, ohne daß hierzu eine direkte Manipulation des Schaltnockens bzw. Schaltelements erforderlich wäre.

Die Erfindung weiter ausgestaltend, wird vorgeschlagen, daß für mehrere in axiale Richtung der Schaltwelle nebeneinander angeordnete Schaltnocken bzw. Schaltelemente jeweils zwei diametral zueinander angeordnete Nuten vorgesehen sind und daß die Schaltwelle zwei diametral zueinander angeordnete Nuten aufweist, die sich jeweils zu Innenverzahnungen verschiedener Schaltnocken bzw. Schaltelemente erstrecken, wobei jeweils eine Nut und ein außenverzahnter Abschnitt um 90° zueinander versetzt angeordnet sind.

Auf diese Art kann auf einfache Weise eine gezielte Verstellung jedes einzelnen der beiden Schaltnocken bzw. Schaltelemente durchgeführt werden, indem daß Verstellwerkzeug in die zugehörige Nut eingeführt wird. Die Entfernung bzw. direkte Manipulation eines in axiale Richtung zu unterst liegenden Schaltnocken bzw. Schaltelements ist bei einer solchen Ausgestaltung nicht mehr erforderlich. Vielmehr kann unter Verwendung des Verstellwerkzeugs auf mittelbare Weise auch auf den unteren Schaltnocken eingewirkt werden, wobei das Verstellwerkzeug in diesem Fall durch die zentrale Bohrung des oben liegenden Schaltnockens hindurchgeführt wird. In der Verstellposition des Verstellwerkzeugs ist dieses mit seinem außenverzahnten Endbereich mit der Innenverzahnung des unteren Schaltnockens in Eingriff, während es mit einem Abschnitt seines nicht verzahnten übrigen Bereichs der Innenverzahnung des oberen Schaltnockens mit einem Abstand gegenüberliegt.

Ein guter Kompromiß zwischen einem hinreichend großen Grenzdrehmoment zur Gewährleistung eines Formschlusses und einer dennoch mit vertretbarem Kraftaufwand durchführbaren Relativverdrehung zwischen Schaltnocken und Schaltwelle wird erzielt, wenn der außenverzahnte Abschnitt sich über einen Winkelbereich von 30° bis 50° erstreckt. Bei einer solchen Ausgestaltung lassen sich ohne weiteres zwei diametral zueinander angeordnete außenverzahnte Abschnitte realisieren und gleichzeitig jeweils dazwischen eine hinreichend breite Einstellnut verwirklichen.

Die der Erfindung zugrundeliegende Aufgabe wird zum anderen ausgehend von einem Signalgeber gemäß dem Oberbegriff des Anspruchs 7 aber auch dadurch gelöst, daß die mechanischen und/oder induktiven Schalter lösbar an einer Trägerplatte befestigt sind, die in einer Ebene senkrecht zu der Mittelachse der Schaltwelle formschlüssig mit dem Gehäuse verbindbar und in Richtung der Schaltwelle zusammen mit den Schaltern aus dem Gehäuse entnehmbar sind und daß die Schalter mittels elastischer Schnapphaken mit der Trägerplatte verbindbar sind.

Aufgrund einer solchen Ausgestaltung lassen sich die Schalter und eventuelle andere elektrische oder elektronische Bauteile im demontierten Zustand der Trägerplatte individuell daran befestigen, wobei dieser Montageschritt außerhalb des beengenden Gehäuses durchgeführt werden kann. Sobald die Trägerplatte mit sämtlichen Bauteilen versehen und entsprechend verdrahtet ist, läßt sich diese auf einfache Weise in das Gehäuse einsetzen, wobei automatisch eine formschlüssige Verbindung mit diesem hergestellt wird. Der Montageaufwand kann auf diese Weise deutlich gesenkt und die Bequemlichkeit des Vorgangs wesentlich gesteigert werden.

Eine Senkung des Montageaufwands wird auch dadurch erzielt, daß die Schalter mittels elastische Schnapphaken mit der Trägerplatte verbindbar sind.

Sofern die Trägerplatte mit einer Mehrzahl von Schnapphaken für unterschiedliche Bauarten und -typen von mechanischen und/oder induktiven Schaltern versehen ist, kann diese als standardisiertes Einheitsbauteil hergestellt werden. Durch die größeren Stückzahlen lassen sich die Kosten für die Produktion erheblich senken. Des weiteren tritt der Effekt einer verringerten Lagerhaltung ein, da im Gegensatz zu den bekannten Signalgebern nicht mehr eine Vielzahl von unterschiedlichen vormontierten Platinen bevorratet werden müssen.

Eine sehr vorteilhafte Ausgestaltung des erfindungsgemäßen Signalgebers besteht darin, daß das Gehäuse zylinderförmig und die daran angepaßte Trägerplatte im wesentlichen rund ist.

Der Formschluß zwischen der Trägerplatte und dem Gehäuse läßt sich auf besonders elegante Weise dadurch herstellen, daß die Trägerplatte mit Ausnehmungen versehen ist, in die im montierten Zustand Halteelemente eingreifen, die mit dem Gehäuse verbunden sind. Diese Halteelemente können beispielsweise auch als Schnapphaken ausgebildet sein, so daß nach dem Einsetzen der Trägerplatte jeglicher weitergehender Montageaufwand entbehrlich ist.

Die Erfindung wird nachfolgend anhand eines Ausführungsbeispiels des Signalgebers, der in der Zeichnung dargestellt ist, näher erläutert. Es zeigt:
- Figur 1: eine Explosionsdarstellung eines Signalgebers mit Gehäuse, Trägerplatte, Schaltwelle und Abdeckhaube,
- Figur 2: eine Seitenansicht des Signalgebers,
- Figur 3: eine Draufsicht auf den Signalgeber,
- Figur 4: einen Schnitt entlang der Linie IV-IV durch den Signalgeber gemäß Figur 3,
- Figur 5: eine perspektivische Darstellung der Schaltwelle, zweier Schaltnocken sowie eines Einstellwerkzeugs,
- Figur 6: eine Seitenansicht der Schaltwelle,
- Figur 7: wie Figur 6, jedoch um 90° verdreht,
- Figur 8: wie Figur 6, jedoch um 180° verdreht,
- Figur 9: einen Schnitt entlang der Linie IX-IX durch die Schaltwelle gemäß Figur 7,
- Figur 10: einen Schnitt entlang der Linie X-X durch die Schaltwelle gemäß Figur 8,
- Figuren 11 und 12: jeweils eine perspektivische Ansicht der Trägerplatte und
- Figur 13: eine Seitenansicht der Trägerplatte.

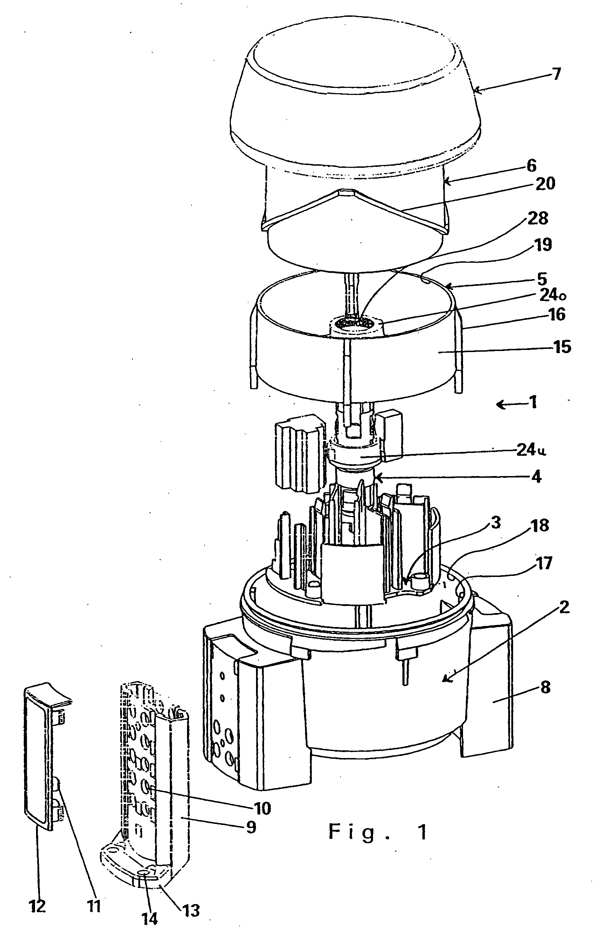

Der in Figur 1 in einer Explosionsdarstellung gezeigte Signalgeber 1 fur einen nicht abgebildeten Stellantrieb besteht im wesentlichen aus einem Gehäuse 2, einer darin einsetzbaren Trägerplatte 3, einer ebenfalls darin einsetzbaren und von einer Betätigungswelle des Stellantriebs antreibbaren Schaltwelle 4, einem Anzeigering 5, einer Kulissenhülse 6 sowie einer Abdeckhaube 7. An dem Gehäuse 2 befinden sich diametral gegenüberliegend zwei Fußaufnahmen 8 für jeweils einen winkelförmigen Fuß 9. Die im Querschnitt balligen Füße 9 sind mit einer Mehrzahl von paarweise übereinander angeordneten Bohrungen 10 versehen, durch die Rastbolzen 11 einer anclipsbaren Befestigungsplatte 12 hindurchführbar sind. Die Füße 9 lassen sich in zwei verschiedenen Positionen in angepaßte Aussparungen im Innern der Fußaufnahmen 8 anordnen. In einer Stellung weisen Aufstandsbereiche 13 der beiden Füße 9 aufeinander zu, während sie im anderen Fall voneinander weg weisen. Auf diese Weise kann der Abstand von Bohrungen 14 zur Befestigung des Signalgebers 1 auf einen Stellantrieb variiert werden. Zusammen mit den auch in ihrer Höhe verstellbaren Füßen 9 läßt sich der Signalgeber 1 daher auf einfache Weise für sämtliche genormten Signalgeber-Schnittstellen bei Stellantrieben verwenden.

Der Anzeigering 5 weist vier gleichmäßig an seiner äußeren Mantelfläche 15 verteilt angeordnete und in axiale Richtung verlaufende Führungsstege 16 auf Diese sind in angepaßten Führungsnuten 17, die sich an der inneren Mantelfläche 18 des Gehäuses 2 befinden, geführt, so daß sich der Anzeigering 15 lediglich in axiale Richtung bewegen kann. An der Mantelinnenfläche 19 des Anzeigerings 5 befinden sich zwei nicht dargestellte Mitnehmer, die mit einer nach außen vorstehenden Kulissenschiene 20 der Kulissenhülse 6 zusammenwirken. Die Kulissenhülse 6 ist im montierten Zustand des Signalgebers formschlüssig mit der Schaltwelle 4 verbunden, so daß aus einer Rotation der Schaltwelle 4 und der Kulissenhülse 6 eine Axialbewegung des Anzeigerings 15 resultiert. Dieser läßt sich somit aus einer von dem undurchsichtigen Gehäuse 2 vollständig verdeckten unteren Stellung in eine den ansonsten sichtbaren oberen Abschnitt der Kulissenhülse 6 verdeckende obere Position überführen. Da die Abdeckhaube 7 aus einem durchsichtigen Material besteht, ist aus allen Richtungen von weitem die Stellung des Stellantriebs und damit auch der davon angetriebenen Armatur ablesbar, nämlich daran, ob der beispielsweise rot eingefärbte obere Abschnitt der Kulissenhülse 6 oder der beispielsweise grün eingefärbte Anzeigering 5 durch die Abdeckhaube 7 hindurch sichtbar ist.

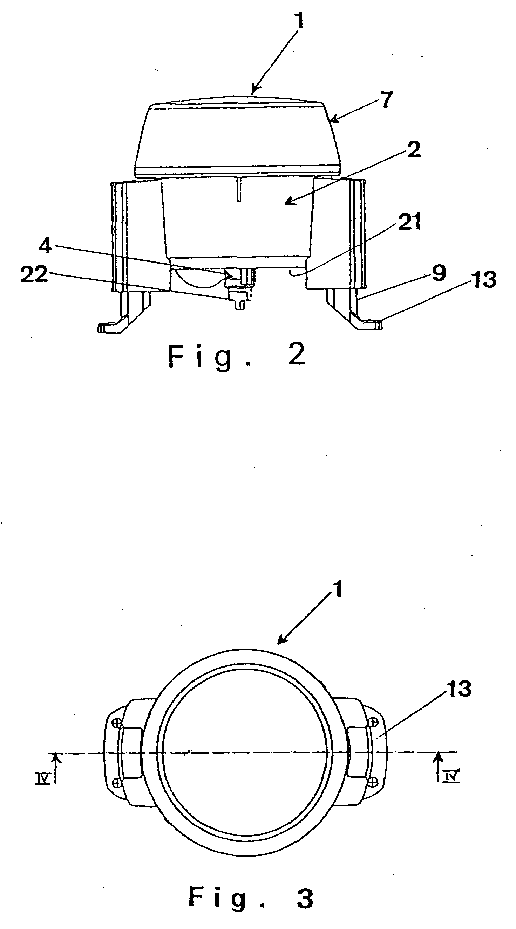

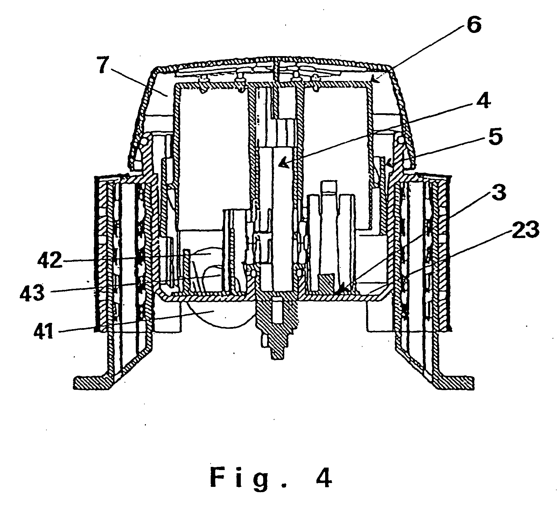

Die Figuren 2 und 3 zeigen den Signalgeber 1 in zusammengebautem Zustand, wobei die Füße 9 mit ihren Standbereichen 13 nach außen weisen. Wie sich den beiden vorgenannten Figuren entnehmen läßt, ist sowohl das Gehäuse 2 als auch die Abdeckhaube 7 im wesentlichen zylinderförmig. Die Schaltwelle 4 ragt mit einem unteren Abschnitt über eine Unterseite 21 des Gehäuses 2 hinaus und läßt sich mittels eines Anschlußzapfens 22 formschlüssig mit einem daran angepaßten Ende der Betätigungswelle des Stellantriebs verbinden.

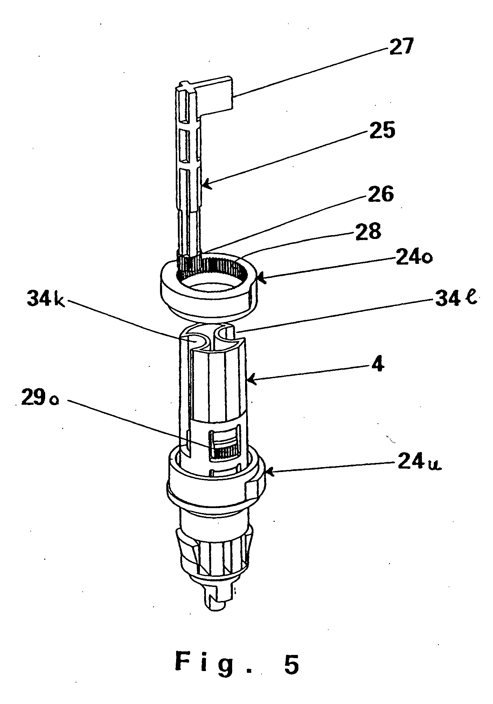

Figur 4 verdeutlicht noch einmal, wie sich die Kulissenhülse 6 auf einem oberen Abschnitt der Schaltwelle 4 drehmomentfest abstützt und wie sich der Anzeigering 5 aus der in Figur 4 dargestellten unteren Position durch Verdrehen der Schaltwelle 4 in eine obere Position überführen läßt, in der er den oberen Abschnitt der Kulissenhülse 6 umgibt und daher von außen her durch die transparente Abdeckhaube 7 zu sehen ist.

Der Figur 4 läßt sich des weiteren entnehmen, daß sich die Trägerplatte 3 im montierten Zustand auf einem Boden 23 des Gehäuses 2 abstützt.

Figur 5 zeigt eine perspektivische Ansicht der Schaltwelle 4 in einer montierten Stellung eines unteren Schaltnockens 24u und einer abgezogenen Stellung eines oberen Schaltnockens 24o. Oberhalb des oberen Schaltnockens 24o ist ein stiftförmiges Einstellwerkzeug 25 abgebildet, das an seinem unteren Ende mit einer Außenverzahnung 26 und an seinem oberen Ende mit einem Handgriff 27 versehen ist.

Die beiden Schaltnocken 24o und 24u sind ringförmig ausgebildet und besitzen eine zentrale Durchgangsbohrung (oder Durchbruch), deren Wandung mit einer Innenverzahnung 28 versehen ist. Die Innenverzahnung 28 jedes der beiden Schaltnocken 24u und 24o wirkt mit jeweils zwei außenverzahnten Abschnitten 29 der Schaltwelle 4 zusammen, so daß eine formschlüssige Verbindung zwischen der Schaltwelle 4 und den Schaltnocken 24o und 24u entsteht.

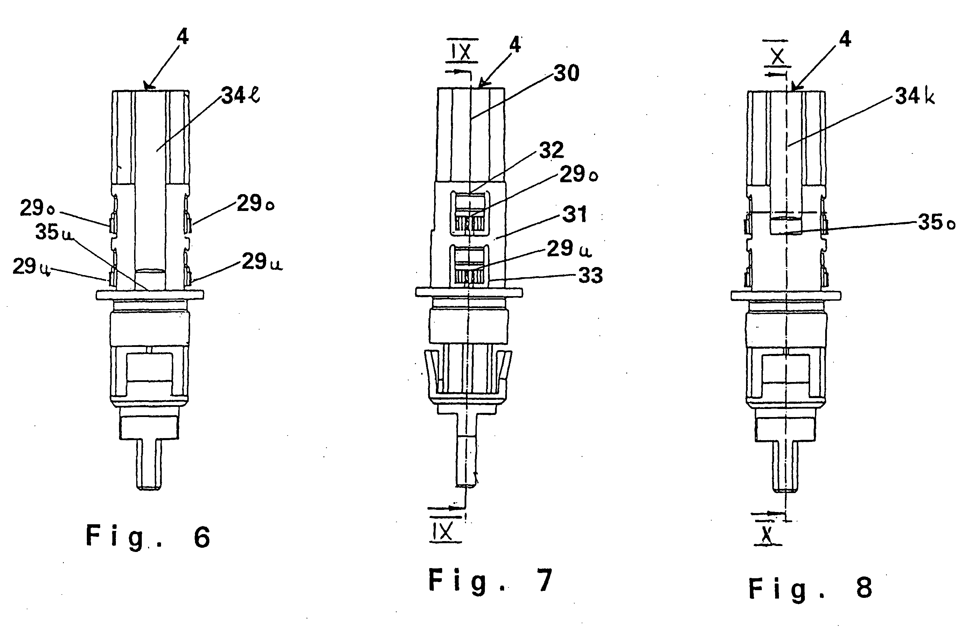

Wie sich der Figur 6 entnehmen läßt, sind die außenverzahnten Abschnitte 29u und 29o paarweise in axiale Richtung mit einem Abstand nebeneinander angeordnet. Die zwei jeweils in axiale Richtung auf gleicher Höhe angeordneten außenverhahnten Abschnitte 29u bzw. 29o sind jeweils an diametral gegenüberliegenden Seiten der Schaltwelle 4 angeordnet.

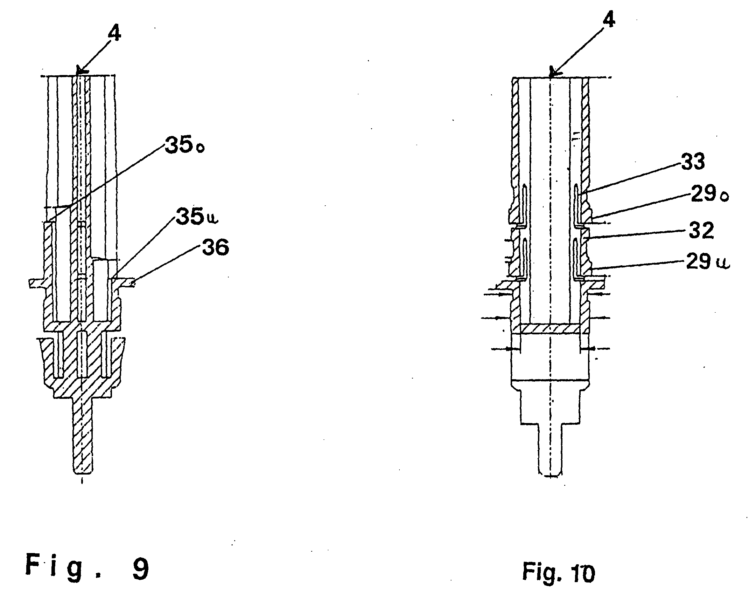

Wie sich insbesondere den Figuren 7 und 10 entnehmen läßt, sind die Abschnitte 29u und 29o elastisch in Richtung der Mittelachse 30 der Schaltwelle 4 verlagerbar, weshalb die formschlüssige Verbindung zwischen den in den Figuren 6 bis 10 nicht dargestellten Schaltnocken 24o und 24u (vgl. Figur 5) und den außenverzahnten Abschnitten 29u und 29o der Schaltwelle 4 dadurch aufhebbar ist, daß auf die Schaltnocken 24u bzw. 24o ein Drehmoment aufgebracht wird, das größer als ein bestimmtes Grenzdrehmoment ist. Bis zu diesem Grenzdrehmoment liegt eine drehmomentfeste Verbindung zwischen den Schaltnocken 24u und 24o und der Schaltwelle 4 vor, wohingegen bei einer Beaufschlagung oberhalb des Grenzdrehmoments ein bewußtes Durchrutschen der Schaltnocken 24u bzw. 24o herbeigeführt wird. Dieses Durchrutschen der Schaltnocken 24u und 24o, das eine Relativbewegung zwischen diesen und der Schaltwelle 4 darstellt, bewirkt eine Veränderung der Nockenlage und damit auch der Schaltwinkel. Hierdurch kann vor Ort eine Feineinstellung des Signalgebers, das heißt, eine Übereinstimmung zwischen der tatsächlichen Armaturenstellung und dem gemeldeten Signal herbeigeführt werden.

Aus Figur 7 ist erkennbar, daß die außenverzahnten Abschnitte 29o und 29u von einem federnden Teil der Wandung 31 der Schaltwelle 4 gebildet wird. Die Schaltwelle 4 ist als Hohlwelle ausgebildet (vgl. auch Figuren 5 und 9 bzw. 10) und die federnden Teile der Wandung 31 sind über jeweils einen Steg 32 mit der übrigen Wandung 31 verbunden. Dabei werden die federnden Teile von jeweils einem U-förmigen Durchbruch 33 in der Wandung 31 begrenzt.

Die Aufbringung eines Drehmoments zur Veränderung der Positionierung der Schaltnocken 24u und 24o erfolgt mit Hilfe des in Figur 5 dargestellten Hilfswerkzeugs 25. Zwischen jeweils zwei federnden außenverzahnten Abschnitten 29u und 29o wird das mit einer Außenverzahnung versehene Ende 26 des Hilfswerkzeugs 25 zum Ansatz gebracht und durch entsprechend kräftiges Drehen des Einstellwerkzeugs 25 ein Durchdrehen der Schaltnocken 24u und 24b herbeigeführt.

Um die vorbeschriebene Verstellung der Schaltnocken 24u und 24o auch im montierten Zustand derselben durchführen zu können, ist die als Hohlwelle ausgebildete Schaltwelle 4 an zwei diametral gegenüberliegenden Seiten mit jeweils einer in Längsrichtung der Schaltwelle 4 verlaufenden Nut 341 und 34k versehen. Wie sich aus einem Vergleich der Figuren 6 und 8 ergibt, erstreckt sich die längere Nut 341 (Figur 6) bis auf die Höhe der Innenverzahnung 28 des unteren Schaltnockens 24u, so daß mit Hilfe des Einstellwerkzeugs 25 eine Verstellung dieses unteren Schaltnockens 24u auch bei montiertem und dadurch nicht verstelltem oberen Schaltnocken 24o erfolgen kann. Aufgrund einer das Ende der Nut 341 bildenden

Anschlagfläche 35 ist die Außenverzahnung 26 des Einstellwerkzeugs 25 automatisch korrekt positioniert, wenn es bis zu einem spürbaren Widerstand in die Nut 341 eingeführt wird. Die kürzere Nut 34k (Figur 8) erstreckt sich hingegen nur bis auf Höhe der Innenverzahnung 28 des oberen Schaltnockens 24o. Aufgrund einer ebenfalls vorhandenen Anschlagfläche 35o ist auch für den oberen Schaltnocken 24o eine korrekte Positionierung des Einstellwerkzeugs automatisch gegeben.

Die unterschiedlichen Höhen der Anschlagflächen 35u und 35o lassen sich sehr anschaulich auch der Figur 9 entnehmen. Die untere Anschlagfläche 35u wird gleichzeitig von einem umlaufenden Bund 36 gebildet, auf dem sich auch der untere Schaltnocken 24u abstützt. Der obere Schaltnocken 24o stützt sich in axiale Richtung wiederum auf den unteren Schaltnocken 24u ab.

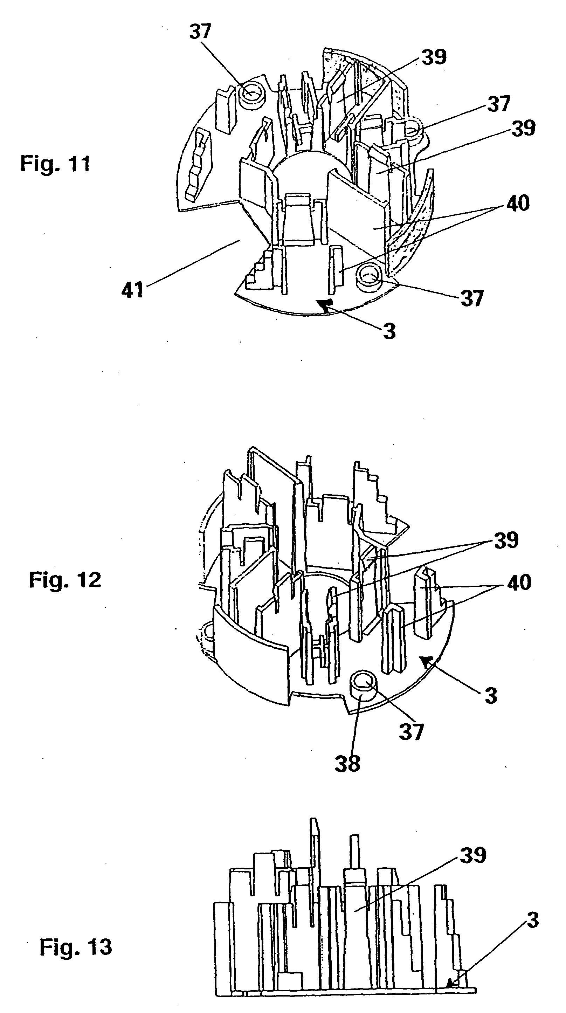

Die in den Figuren 11 bis 13 dargestellte Trägerplatte 3 dient zur Aufnahme von der Übersichtlichkeit halber in der Zeichnung nicht näher dargestellten mechanischen und/oder induktiven Schaltern. Während die Betätigung von mechanischen Schaltern über ein Auflaufen auf die Flanken der Schaltnocken 24u und 24o erfolgt, geschieht die Betätigung von induktiven Schaltern berührungslos. Die in der Zeichnung dargestellten Schaltnocken 24u und 24o sind mit nicht abgebildeten ringförmigen Taschen zur Aufnahme von entsprechend gebogenen Metallplättchen versehen, die zur berührungslosen Auslösung der induktiven Schalter dienen. Die Funktionen der Schaltnocken und Schaltelemente werden somit von jeweils ein und demselben Bauteil wahrgenommen.

Wie sich den Figuren 1 und 4 entnehmen läßt, kann die im Montagezustand (Figur 4) auf dem Boden 23 des Gehäuses 2 angeordnete Trägerplatte 3 zum Zwecke einer einfachen Montage der Schalter aus dem Gehäuse 2 in axiale Richtung entfernt werden (Figur 1).

Um eine Verdrehung der Trägerplatte 3 in Folge der Verdrehung der Schaltnocken zu verhindern, ist die Trägerplatte 3 mit drei Bohrungen 37 versehen, die jeweils von einem ringförmigen Kragen 38 umgeben sind. Durch diese Bohrungen 37 ragen vom Boden 23 des Gehäuses 2 entsprechend angeordnete bolzenförmige Halteelemente hindurch, so daß es zu einer formschlüssigen Verbindung zwischen der Trägerplatte 3 und dem Gehäuse 2 in einer Ebene senkrecht zu der Schaltwelle 4 kommt.

Wie sich den Figuren 11 bis 13 deutlich entnehmen läßt, ist die Trägerplatte 3 mit einer Vielzahl von Schnapphaken 39 und Stützelementen 40 für unterschiedliche Bauarten und -typen von mechanischen und/oder induktiven Schaltern versehen. Je nach Einsatzfall des Signalgebers wird in der Regel nur ein Teil dieser Schnapphaken 39 bzw. Stützelemente 40 belegt. Aus Gründen der größeren Stückzahl und der damit einhergehenden Senkung des Lageraufwandes ist es jedoch vorteilhaft, eine für alle Einsatzfälle universell verwendbare Trägerplatte 3 zu realisieren.

Aus Figur 11 ist zu erkennen, daß die im wesentlichen runde Trägerplatte 3 eine ungefähr trapezförmige Aussparung 41 aufweist. An der damit korrespondierenden Stelle des Bodens 23 des Gehäuses befindet sich ein vertiefter Bereich 41, dessen Stirnseite 42 mit einer Bohrung 43 zur Durchführung eines aus einer Vielzahl von Einzelleitungen bestehenden Anschlußkabels versehen ist.

## Patentansprüche

1. Signalgeber (1) für einen Stellantrieb bestehend aus einem Gehäuse (2), das an einer Oberseite des Stellantriebs befestigbar ist, und einer in dem Gehäuse (2) drehbar gelagerten Schaltwelle (4), die mit einer über die Oberseite des Stellantriebs vorstehenden Betätigungswelle schlupffrei kuppelbar ist, wobei die Schaltwelle (4) drehmomentfest verbindbar ist mit mindestens einem auf der Schaltwelle montierten und in einer Vielzahl von Winkelstellungen positionierbaren Schaltnocken (24o und 24u) zur Betätigung eines mechanischen Schalters und/oder mit mindestens einem auf der Schaltwelle montierten und in einer Vielzahl von Winkelstellungen positionierbaren Schaltelement zur Betätigung eines induktiven Schalters, wobei der oder die Schalter in dem Gehäuse (2) angeordnet ist oder sind, und wobei die Wandung jeweils eines Durchbruchs in dem Schaltnocken (24o und 24u) bzw. Schaltelement mit einer Innenverzahnung (28) versehen ist, **dadurch gekennzeichnet, daß** die Innenverzahnung (28) mit mindestens einem jeweils zugeordneten, entsprechend außenverzahnten Abschnitt (29o, 29u) der im übrigen verzahnungsfreien Schaltwelle (4) in Eingriff bringbar ist, wobei der Abschnitt (29o, 29u) elastisch in Richtung der Mittelachse (30) der Schaltwelle (4) verlagerbar ist.

2. Signalgeber nach Anspruch 1, **dadurch gekennzeichnet, daß** die Schaltwelle (4) als Hohlwelle ausgebildet und der außenverzahnte Abschnitt (29o, 29u) von einem federnden Teil der Wandung (31) der Hohlwelle gebildet wird, der über einen Steg (32) mit der übrigen Wandung (31) verbunden ist.

3. Signalgeber nach Anspruch 2, **dadurch gekennzeichnet, daß** der federnde Teil von einem U-förmigen Durchbruch (33) in der Wandung (31) begrenzt wird.

4. Signalgeber nach Anspruch 1 oder 2, **dadurch gekennzeichnet, daß** die Schaltwelle (4) mindestens eine halbovalförmige und in Richtung der Mittelachse (30) verlaufende Nut (34k, 341) aufweist, die sich von der dem Stellantrieb abgewandten Stirnseite der Schaltwelle (4) bis zu der Innenverzahnung (28) des Schaltnockens (24o, 24u) bzw. Schaltelements erstreckt.

5. Signalgeber nach Anspruch 4, **dadurch gekennzeichnet, daß** für mehrere in axiale Richtung der Schaltwelle (4) nebeneinander angeordnete Schaltnocken (24o, 24u) bzw. Schaltelemente jeweils zwei diametral zueinander angeordnete außenverzahnte Abschnitte (29o, 29u) vorgesehen sind und daß die Schaltwelle (4) zwei diametral zueinander angeordnete Nuten (34k, 341) aufweist, die sich jeweils zu Innenverzahnungen (28) verschiedener Schaltnocken (24o, 24u) bzw. Schaltelemente erstrecken, wobei jeweils eine Nut (34k, 341) und ein außenverzahnter Schnitt (29o, 29u) um 90° zueinander versetzt angeordnet sind.

6. Signalgeber an einem der Ansprüche 1 bis 5, **dadurch gekennzeichnet, daß** der außenverzahnte Abschnitt (29o, 29u) sich über einen Winkelbereich von 30° bis 50° erstreckt.

7. Signalgeber (1) für einen Stellantrieb bestehend aus einem Gehäuse (2), das an einer Oberseite des Stellantriebs befestigbar ist, und einer in dem Gehäuse (2) drehbar gelagerten Schaltwelle (4), die mit einer über die Oberseite des Stellantriebs vorstehenden Betätigungswelle schlupffrei kuppelbar ist, wobei die Schaltwelle (4) drehmomentfest verbindbar ist mit mindestens einem auf der Schaltwelle montierten und in einer Vielzahl von Winkelstellungen positionierbaren Schaltnocken (24o und 24u) zur Betätigung eines mechanischen Schalters und/oder mit mindestens einem auf der Schaltwelle montierten und in einer Vielzahl von Winkelstellungen positionierbaren Schaltelement zur Betätigung eines induktiven Schalters, wobei der oder die Schalter in dem Gehäuse (2) angeordnet ist oder sind, wobei die mechanischen und/oder induktiven Schalter lösbar an einer Trägerplatte 83) befestigt sind, **dadurch gekennzeichnet daß** diese Trägerplatte (83) in einer Ebene senkrecht zu der Mittelachse (30) der Schaltwelle (4) formschlüssig mit dem Gehäuse (2) verbindbar und in Richtung der Schaltwelle (4) zusammen mit den Schaltern aus dem Gehäuse (2) entnehmbar ist und daß die Schalter mittels elastischer Schnapphaken (39) mit der Trägerplatte (3) verbindbar sind.

8. Signalgeber an Anspruch 7, **dadurch gekennzeichnet, daß** die Trägerplatte (3) mit einer Mehrzahl von Schnapphaken (39) für unterschiedliche Bauarten und -typen von mechanischen und/oder induktiven Schaltern versehen ist.

9. Signalgeber an Anspruch 7 oder 8, **dadurch gekennzeichnet, daß** das Gehäuse (2) zylinderförmig und die daran angepaßte Trägerplatte (3) im wesentlichen rund ist.

10. Signalgeber nach einem der Ansprüche 7 bis 9, **dadurch gekennzeichnet, daß** die Trägerplatte (3) mit Ausnehmungen versehen ist, in die im montierten Zustand Halteelemente eingreifen, die mit dem Gehäuse (2) verbunden sind.

## Claims

1. A signal transmitter (1) for an actuating drive, consisting of a housing (2), which can be fixed to an upper side of the actuating drive, and a control shaft (4), which is rotatably mounted in the housing (2) and can be coupled without slip to an operating shaft projecting above the top of the actuating drive, in which case the control shaft (4) can be connected in a torque-resistant manner to at least one trip cam (24o and 24u), which is mounted on the control shaft and can be positioned in a plurality of angular positions for the operation of a mechanical switch, and/or to at least one switching element, which is mounted on the control shaft and can be positioned in a plurality of angular positions for the operation of an inductive switch, the switch or switches being located in the housing (2), and the wall of an opening in each trip cam (24o and 24u) or switching element being provided with an internal toothing (28), **characterized in that** the internal toothing (28) can be made to engage with at least one corresponding externally toothed portion (29o, 29u) of the control shaft (4), which otherwise is free of toothing, the portion (29o, 29u) being elastically displaceable towards the central axis (30) of the control shaft (4).

2. A signal transmitter according to Claim 1, **characterized in that** the control shaft (4) takes the form of a hollow shaft and the externally toothed portion (29o, 29u) is formed from a flexible part of the wall (31) of the hollow shaft, said flexible part of the wall being connected to the remaining wall (31) by way of a web (32).

3. A signal transmitter according to Claim 2, **characterized in that** the boundaries of the flexible part are established by a U-shaped opening (33) in the wall (31).

4. A signal transmitter according to Claim 1 or 2, **characterized in that** the control shaft (4) has at least one semi-oval-shaped groove (34k, 341) running in the direction of the central axis (30) and extending from the end of the control shaft (4) that faces away from the actuating drive up to the internal toothing (28) of the trip cam (24o, 24u) or switching element.

5. A signal transmitter according to Claim 4, **characterized in that** two externally toothed portions (29o, 29u) are provided diametrically opposite one another for each of a plurality of trip cams (24o, 24u) or switching elements disposed next to one another in axial direction of the control shaft (4); and in that the control shaft (4) has two grooves (34k, 341) disposed diametrically opposite one another, each extending up to internal toothings (28) of various trip cams (24o, 24u) or switching elements, a groove (34k, 341) and an externally toothed portion (29o, 29u) respectively being disposed in such a way as to be offset in relation to one another by 90°.

6. A signal transmitter according to one of Claims 1 to 5, **characterized in that** the externally toothed portion (29o, 29u) extends over a circumferential area ranging between 30° and 50°.

7. A signal transmitter (1) for an actuating drive, consisting of a housing (2), which can be fixed to an upper side of the actuating drive, and a control shaft (4), which is rotatably mounted in the housing (2) and can be coupled without slip to an operating shaft projecting above the top of the actuating drive, in which case the control shaft (4) can be connected in a torque-resistant manner to at least one trip cam (24o and 24u), which is mounted on the control shaft and can be positioned in a plurality of angular positions for the operation of a mechanical switch, and/or to at least one switching element, which is mounted on the control shaft and can be positioned in a plurality of angular positions for the operation of an inductive switch, the switch or switches being located in the housing (2), and the mechanical and/or inductive switches being detachably fixed to a carrier plate (3), **characterized in that** this carrier plate (3) can be connected to the housing (2) in an interlocking manner on a plane perpendicular to the central axis (30) of the control shaft (4) and, together with the switches, can be removed from the housing (2) in the direction of the control shaft (4); and in that the switches can be connected to the carrier plate (3) by means of elastic snap hooks (39).

8. A signal transmitter according to Claim 7, **characterized in that** the carrier plate (3) is provided with a plurality of snap hooks (39) for different designs and types of construction of mechanical and/or inductive switches.

9. A signal transmitter according to Claim 7 or 8, **characterized in that** the housing (2) is cylindrical in shape and the carrier plate (3), proportioned accordingly, is predominantly round.

10. A signal transmitter according to one of Claims 7 to 9, **characterized in that** the carrier plate (3) is provided with recesses, in which holding elements, connected to the housing (2), engage when carrier plate (3) and housing (2) are assembled.

## Revendications

1. Dispositif (1) de signalisation pour un actionneur, constitué d'un boîtier (2), qui peut être fixé sur le dessus de l'actionneur, et d'un arbre (4) de commutation, qui est monté à rotation dans le boîtier (2) et qui peut être accouplé sans patinage à un arbre d'actionnement dépassant sur le dessus de l'actionneur, l'arbre (4) de commutation pouvant être solidaire en rotation d'au moins une came (24o et 24u) de commutation, montée sur l'arbre de commutation, pouvant être positionnée dans une pluralité de positions angulaires et destinée à actionner un commutateur mécanique, et/ou à au moins un élément de commutation, monté sur l'arbre de commutation, pouvant être positionné dans une pluralité de positions angulaires et destiné à actionner un commutateur inductif, le ou les commutateurs étant disposés dans le boîtier (2) et la paroi respective d'un ajour dans la came (24o et 24u) de commutation ou l'élément de commutation étant pourvue d'une denture (28) intérieure,
**caractérisé en ce que** la denture (28) intérieure peut être amenée en prise avec au moins une partie (290, 29u) associée respective, à denture extérieure correspondante, de l'arbre (4) de commutation au reste dépourvu de denture, la partie (290, 29u) pouvant être déplacée élastiquement en direction de l'axe (30) médian de l'arbre (4) de commutation.

2. Dispositif de signalisation suivant la revendication 1,
**caractérisé en ce que** l'arbre (4) de commutation est conçu comme arbre creux, et la partie (290, 29u) à denture extérieure est formée par une partie élastique de la paroi (31) de l'arbre creux qui est reliée au reste de la paroi (31) par une partie (32) de liaison.

3. Dispositif de signalisation suivant la revendication 2,
**caractérisé en ce que** la partie élastique est délimitée par un ajour (33) en U dans la paroi (31).

4. Dispositif de signalisation suivant la revendication 1 ou 2,
**caractérisé en ce que** l'arbre (4) de commutation comporte au moins une rainure (34k, 341) semi-ovale et s'étendant en direction de l'axe (30) médian, rainure qui s'étend depuis le côté frontal de l'arbre (4) de commutation qui est opposé à l'actionneur jusqu'à la denture (28) intérieure de la came (240, 24u) de commutation ou de l'élément de commutation.

5. Dispositif de signalisation suivant la revendication 4,
**caractérisé en ce que**, pour plusieurs cames (240, 24u) ou éléments de commutation juxtaposés dans la direction axiale de l'arbre (4) de commutation, il est prévu deux parties (290, 29u) respectives à denture extérieure diamétralement opposées, et en ce que l'arbre (4) de commutation comporte deux rainures (34k, 341) diamétralement opposées, qui s'étendent respectivement vers des dentures (28) intérieures de différents éléments ou cames (240, 24u) de commutation, une rainure (34k, 341) et une partie (290, 29u) à denture extérieure étant chaque fois disposées en décalage mutuel de 90°.

6. Dispositif de signalisation suivant l'une des revendications 1 à 5, **caractérisé en ce que** la partie (29o, 29u) à denture extérieure s'étend sur un secteur angulaire de 30° à 50°.

7. Dispositif (1) de signalisation pour un actionneur, constitué d'un boîtier (2), qui peut être fixé sur le dessus de l'actionneur, et d'un arbre (4) de commutation, qui est monté à rotation dans le boîtier (2) et qui peut être accouplé sans patinage à un arbre d'actionnement dépassant sur le dessus de l'actionneur, l'arbre (4) de commutation pouvant être lié en rotation à au moins une came (240 et 24u) de commutation, montée sur l'arbre de commutation, pouvant être positionnée dans une pluralité de positions angulaires et destinée à actionner un commutateur mécanique, et/ou à au moins un élément de commutation, monté sur l'arbre de commutation, pouvant être positionné dans une pluralité de positions angulaires et destiné à actionner un commutateur inductif, le ou les commutateurs étant disposés dans le boîtier (2) et les commutateurs mécaniques et/ou inductifs étant fixés de manière amovible sur une plaque (3) porteuse,
**caractérisé en ce que** cette plaque (3) porteuse peut être assemblée en engagement positif au boîtier (2) dans un plan perpendiculaire à l'axe (30) médian de l'arbre (4) de commutation et peut être retirée du boîtier dans la direction de l'arbre (4) de commutation conjointement avec les commutateurs, et en ce que les commutateurs peuvent être assemblés à la plaque (3) porteuse au moyen de crochets (39) élastiques d'encliquetage.

8. Dispositif de signalisation suivant la revendication 7,
**caractérisé en ce que** la plaque (3) porteuse est dotée d'une pluralité de crochets (39) d'encliquetage pour des types et modes de construction différents de commutateurs mécaniques et/ou inductifs.

9. Dispositif de signalisation suivant la revendication 7 ou 8,
**caractérisé en ce que** le boîtier (2) est cylindrique, et la plaque (3) porteuse adaptée à ce boîtier est essentiellement circulaire.

10. Dispositif de signalisation suivant l'une des revendications 7 à 9, **caractérisé en ce que** la plaque (3) porteuse est pourvue d'évidements dans lesquels s'engagent, lorsque la plaque est montée, des éléments de maintien qui sont assemblés au boîtier (2).
